Europäisches Patentamt

European Patent Office

Office européen des brevets

(19)

(11) Veröffentlichungsnummer: **0 161 414**
**A1**

# (12) EUROPÄISCHE PATENTANMELDUNG

(21) Anmeldenummer: **85102951.2**

(22) Anmeldetag: **14.03.85**

(51) Int. Cl.⁴: **G 02 B 6/28,** H 04 B 9/00,
G 02 B 26/02

(30) Priorität: **30.03.84 CH 1627/84**

(43) Veröffentlichungstag der Anmeldung: **21.11.85**
**Patentblatt 85/47**

(84) Benannte Vertragsstaaten: **AT CH DE FR LI NL SE**

(71) Anmelder: **BBC Aktiengesellschaft Brown, Boveri & Cie.,
Haselstrasse, CH-5401 Baden (CH)**

(72) Erfinder: **Kopainsky, Jürgen, Dr.,
Sommerhaldenstrasse 4a, CH-5200 Brugg (CH)**
Erfinder: **Mosele, Joseph, Bromeggstrasse 16,
CH-4562 Biberist (CH)**

(54) Schaltanlage.

(57) In der Schaltanlage sind eine zentrale Schaltwarte (25) mit mehreren dezentralen Betriebsmitteln zugeordnete Leiteinrichtung über ein Lichtleitkabel (2) verbunden. Das Lichtleitkabel (2) wird von einer Lichtquelle (1) gespeist. Die Leiteinrichtungen weisen passive Geber (4, 5, 6) auf, welche gruppenweise, z.B. für jedes Betriebsmittel oder pro Signaltyp, in Serie geschaltet sind. In der zentralen Schaltwarte ist eine Auswerteeinrichtung (12) vorgesehen, welche das von den Gebern modulierte Licht auswertet. Auf diese Weise lassen sich bei geringen Übertragungsverlusten nicht nur bestimmte logische Verknüpfungen zwischen einzelnen Gebern (und damit Betriebsmittelzuständen) herstellen, sondern auch bei Verwendung unterschiedlicher Modulationen in den einzelnen Gebern die Betriebsmittelzustände lokalisieren.

30/84

30.3.84
He/eh

- 1 -


SCHALTANLAGE


Die Erfindung bezieht sich auf eine Schaltanlage mit
mindestens einer zentralen Schaltwarte und mehreren
dezentralen Leiteinrichtungen gemäss dem Gattungsbegriff des Anspruchs 1.


Eine Schaltanlage dieser Gattung ist beispielsweise
aus der DE-OS 30 27 078 bekannt.


Schaltanlagen sind in ihrem grundsätzlichen Aufbau z.B.
in dem Buch von Lueger "Lexikon der Technik", Band 7,
Lexikon der Energietechnik und Kraftmaschinen" DVA-Stuttgart 1965, Seiten 242 - 245 und 252/253, oder in der
Buchreihe von Moeller "Leitfaden der Elektrotechnik"
Band IX "Elektrische Energieverteilung", B.G.Teubner
Stuttgart 2. Auflage 1975, Seite 221 ff., insbesondere
Seite 238 ff. ausführlich beschrieben.


Für die Steuerung von Schaltgeräten sowie für die Auslösung durch Schutzeinrichtungen und die Meldung von Schalterstellungen und Störungen muss in einer Schaltanlage ein gesichertes vom gestörten Netz unabhängiges Hilfsstromnetz vorhanden sein, das aus einer Vielzahl von Hilfsstromkreisen besteht. Die sich über die gesamte Schaltanlage ausdehnenden Hilfsstromkreise umfassen die umfangreiche Apparatur für Steuerung, Meldung, Signalisation, Synchronisierung, Regelung, Messung und Schutz und deren Anzeige und Befehlsgeräte. Diese werden teils vor Ort, teils in der zentralen Schaltwarte, teils aber auch in dezentralen Schaltwarten untergebracht.

Die Hilfsstromkreise wiederum gliedern sich in Betätigungs-, Melde- und Auslösekreise. Aufgrund ihrer geringen Signalpegel sind gerade die Meldekreise in erheblichem Umfang induktiven und kapazitiven Störeinflüssen ausgesetzt. Insbesondere werden durch transiente Ueberspannungen, wie sie zum Beispiel bei Schaltvorgängen oder Blitzeinschlägen auftreten, auf den aus Kupferkabel bestehenden Leitungsverbindungen zwischen Gebern und zentraler Schaltwarte Störsignale erzeugt, die Steuerungs- oder Ueberwachungssignale vortäuschen können, so dass die Funktions- und Betriebssicherheit der Schaltanlage gefährdet werden kann.

Um derartigen Erscheinungen vorzubeugen, wird in der eingangs genannten Offenlegungsschrift vorgeschlagen, diese Kupferkabel durch ein Lichtleitkabel zu ersetzen, das als Ringleitung ausgebildet ist, welches die zentrale Schaltwarte mit den verschiedenen Steuerungs- und Ueberwachungseinrichtungen der Schaltanlage und die Steuer- und Ueberwachungseinrichtungen untereinander verbindet. Dabei ist an der Schaltwarte und an jeder Steuerungs- und Ueberwachungseinrichtung eine Lichteinkoppel- und eine Lichtauskoppeleinheit vorgesehen. Jede dieser Einheiten besteht aus drei Lichtleitkabeln, nämlich aus einem Lichtleitkabel, das an der jeweiligen Steuer- und Ueberwachungseinrichtung vorbeigeführt ist, und aus zwei Lichtleitkabeln, die von der Steuerungs- und Ueberwachungseinheit kommen bzw. zu ihr führen. Zwischen den Lichtleitkabeln und dem ankommenden Teil der Ringleitung bzw. dem abgehenden Teil der Ringleitung ist jeweils eine Lichtmischeinrichtung vorgesehen. Damit entspricht die bekannte Leitung funktionsmässig und schaltungsmässig einer metallischen Leitung, jedoch mit dem Nachteil, dass an den Lichtmischeinrichtungen Verluste auftreten. Eine weitere Unzulänglichkeit ist darin zu sehen, dass in der zentralen Schaltwarte besondere Vorkehrungen getroffen werden müssen, um das Ansprechen eines Gebers überhaupt erkennen zu können, da die jeweilige Geberausgangsgrösse dem gerade an der Zugleitung anliegenden Signal in der Lichtmischeinrichtung zugemischt oder überlagert wird.

Der Erfindung, wie sie in den Patentansprüchen gekennzeichnet ist, liegt die Aufgabe zugrunde, eine Schaltanlage der eingangs genannten Gattung derart auszugestalten, dass der optische Uebertragungsweg möglichst wenig Verluste aufweist, ohne dass der schaltungstechnische Aufwand in der Auswerteeinheit steigt und die Ansprechempfindlichkeit vermindert wird.

Durch die Serienschaltung der Geber entfallen zunächst einmal verlustbehaftete Lichtmischeinrichtungen. Sie erlaubt es ohne grossen Aufwand beliebige logische Verknüpfungen der in Serie geschalteten Gebergruppe zu bewerkstelligen. In der zentralen Schaltwarte gestaltet sich die Auswertung des ankommenden Signals insofern einfach, als lediglich die Modulation (Frequenz, Amplitude, Phase oder Polarisation) mit dem ausgesandten Licht verglichen werden muss.

Die Erfindung sowie ihre in den abhängigen Ansprüchen beschriebenen Weiterbildungen und Ausgestaltungen werden nachstehend anhand von Ausführungsbeispielen und den zugehörigen Zeichnungen näher erläutert.

In der Zeichnung zeigt:

Fig. 1    eine schematische, stark vereinfachte Darstellung einer Serienschaltung von Gebern in einem Lichtleitkabel,

Fig. 2    eine Prinzipskizze mit Gebertypen für Gasdruck, Schalterposition und Oelgehalt, welche im Zuge eines Lichtleitkabels hintereinandergeschaltet sind,

Fig. 3    eine schematische Darstellung eines Teils einer Schaltanlage mit hintereinandergeschalteten Gebern eines Signaltyps,

Fig. 4    eine schematische Darstellung eines Teils einer Schaltanlage mit hintereinandergeschalteten Gebern, die einem Betriebsmittel zugeordnet sind.

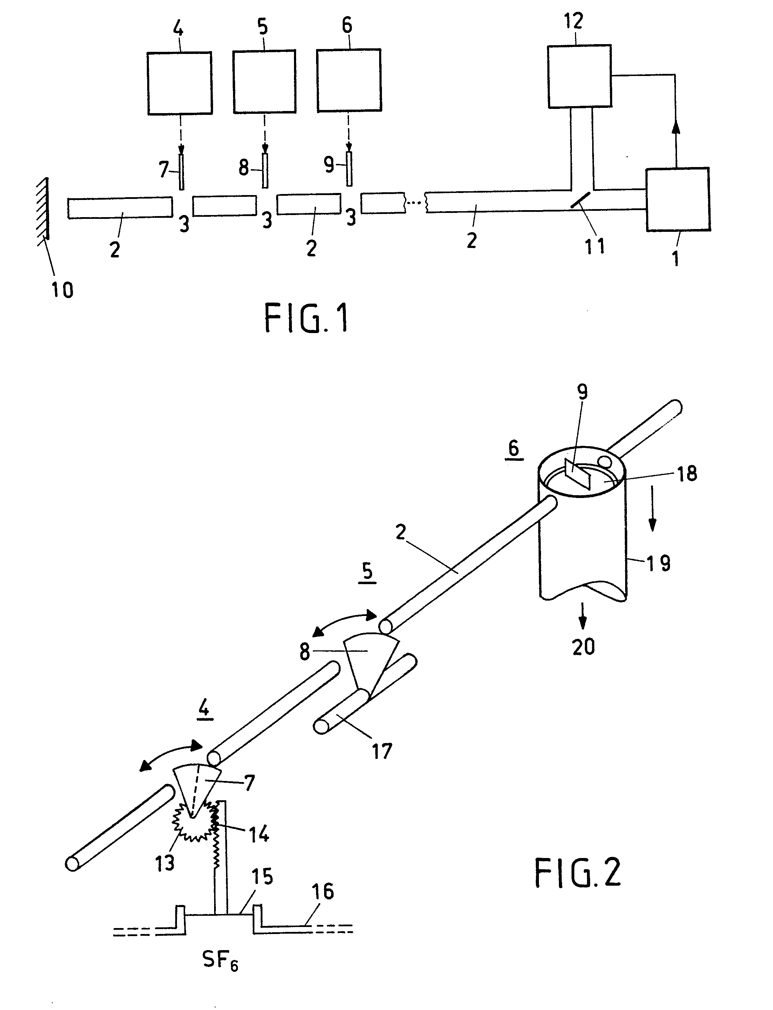

In Fig. 1 speist ein Sender 1 weisses Licht, was z.B. von einer Quecksilber-Hochdrucklampe oder einer Kombination von Leuchtdioden erzeugt wird, in ein Lichtleitkabel 2 ein. Das Lichtleitkabel ist an mehreren Stellen unterbrochen, wobei sich die Stirnfläche der einzelnen Lichtleitkabelabschnitte - durch einen engen Spalt 3 getrennt und gegen Fremdlicht abgeschirmt - planparallel und kollinear gegenüberstehen. Mit 4, 5, 6 sind passive Geber bezeichnet, welche eine Gebereingangsgrösse, wie Druck, Schalterposition oder Oelgehalt, in eine mechanische Ausgangsgrösse, im vorliegenden Fall in eine Bewegung einer Farbblende 7, 8, 9, welche beim Ansprechen des Gebers in den Spalt 3 eintaucht, umwandeln. Am Ende des Lichtleitkabels 2 ist ein Spiegel 10 vorgesehen, welcher das von der Lichtquelle 1 ausgesandte Licht in sich selbst reflektiert. Dieses reflektierte Licht gelangt über das Lichtleitkabel 2 zurück und wird über eine optische Weiche - symbolisiert durch einen halbdurchlässigen Spiegel 11 - einer Auswerteeinrichtung 12 zugeführt.

Bevor auf die Wirkungsweise der Anordnung nach Fig. 1 eingegangen wird, soll anhand der Fig. 2 der grundsätzliche Aufbau passiver Geber für die Signaltypen Druck, Schalterposition und Oelgehalt erläutert werden.

Der gesamthaft mit der Bezugsziffer 4 bezeichnete Druckgeber weist eine drehbare Farbblende 7 auf. Ihre Welle trägt ein Zahnrad 13, das mit einer Zahnstange 14 kämmt. Die Zahnstange ist auf einer Membran 15 befestigt, welche eine Oeffnung im Gehäuse 16 eines $SF_6$-Gasraumes abschliesst. Ein Absinken oder auch Ansteigen des Gasdrucks im Gehäuseinnern wird unmittelbar in eine Schwenkbewegung der Farbblende 7 umgesetzt. Je nach Ausbildung der Farbblende 7 und deren relativer Lage zur Welle kann bei Ueber- oder Unterschreiten eines bestimmten Druckes im Gehäuseinnern das durch den Geber hindurchfallende Licht in seiner spektralen Zusammensetzung verändert werden.

Der Geber 5 für die Schaltgeräteposition gestaltet sich insofern einfach, als hier nur eine Kupplung der Welle 17 oder des beweglichen Schaltkontaktes der Farbblende 8 mit einem geeigneten Teil des Schalterantriebes erforderlich ist.

Der Geber 6 für den Oelgehalt entspricht im wesentlichen einem bekannten Füllstandsanzeiger: Ein Schwimmer 18 kann sich abhängig vom Oelstand in dem zu überwachenden Oelbehälter in einem Schwimmergehäuse 19 bewegen. Der Schwimmer 18 trägt eine Farbblende 9, welche abhängig von Oelstand im Schwimmergehäuse 19 das mit dem zu überwachenden Oelvolumen 20 in Verbindung steht, in den Strahlengang des Lichtes bewegt wird.

Die Wirkungsweise der Anordnung gemäss Fig. 1 geht aus folgendem hervor:
Die Lichtquelle sendet weisses Licht aus. Die Geber 4, 5, 6, die einem bestimmten Abschnitt der Schaltanlage zugeordnet sind, detektieren den Normalzustand, d.h. die Blenden 7, 8 und 9 befinden sich ausserhalb der Spalte 3. Das Licht tritt durch das Lichtleitkabel 2, wird am Spiegel 10 reflektiert und gelangt auf dem selben Weg zurück zur Auswerteeinrichtung 12. In dieser wird das ankommende Licht mit dem ausgesandten hinsichtlich spektraler Zusammensetzung verglichen. Im Normalzustand stimmen beide überein. Ein Absinken des Druckes am Geber 4 bewirkt das Einschwenken der Farbblende 4, was eine Aenderung der Farbzusammensetzung des der Auswerteeinrichtung 12 zugeführten Lichtes zur Folge hat. Gleiches gilt für das Ansprechen des Gebers 5 für die Schaltgeräteposition oder des Gebers 6 für den Oelgehalt.
Bei Verwendung von Blenden unterschiedlicher Farbe lässt sich durch Farbdetektion in der Auswerteeinrichtung 12 der Betriebsmittelzustand jeder Kenngrösse eines Betriebsmittels erkennen, um im Störungsfall die geeignete Massnahme einzuleiten.

Darüber hinaus können auch weitere Messgrössen einer Schaltanlage wie Gasdichte, Spannung, Strom, Ladungszustand eines Energiespeichers etc. nach dem selben Prinzip detektiert werden. Wichtig dabei ist, dass die Gebereingangsgrösse mittelbar oder unmittelbar eine Veränderung (Modulation des durch den Geber geleiteten Lichtes) zur Folge hat.

Die Anordnung gemäss Fig. 1 kann in der beschriebenen Weise auch mit einfarbigem Licht betrieben werden. Zu diesem Zweck sind die Blenden lichtundurchlässig ausgebildet. Alle im Zuge eines Lichtleitkabels in Reihe geschalteten Geber sind dann im Sinne einer logischen ODER-Verknüpfung angeordnet: Das Ansprechen nur eines Gebers detektiert ein Abweichen vom Normalzustand, d.h. eine Betriebsstörung. Die UND-Verknüpfung lässt sich erreichen, wenn die Blenden 4, 5, 6 aller Geber im Normalzustand den Strahlengang des Lichtes unterbrechen.

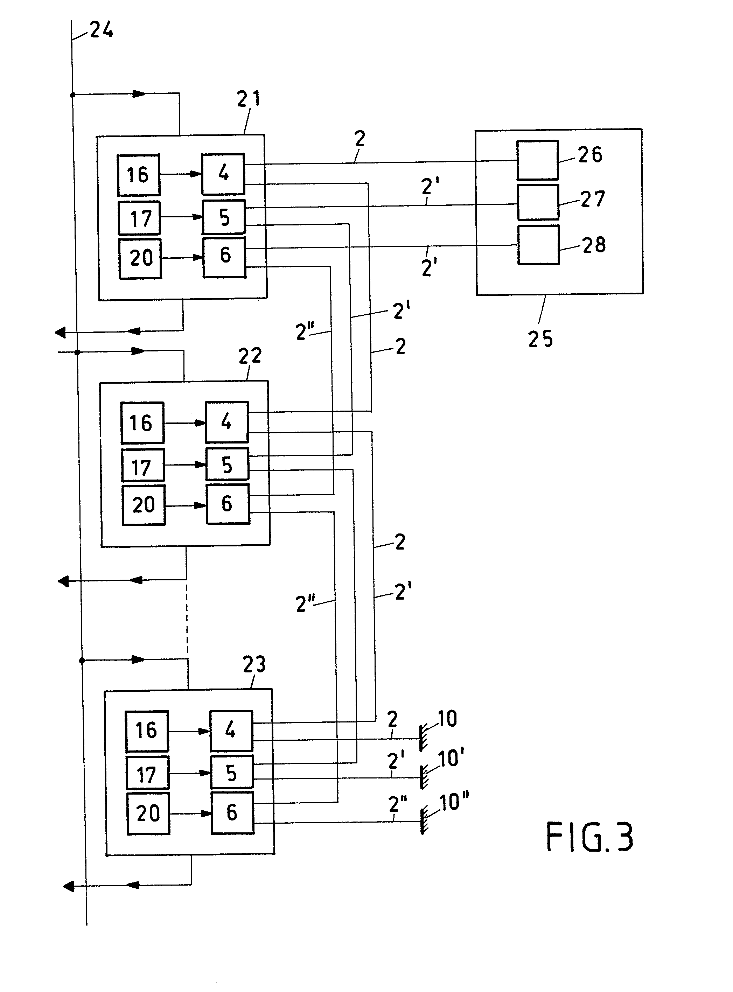

Neben einer echten binären Modulation des Lichtes durch die Geber lässt sich z.B. durch Anordnung verschiedenfarbiger Blenden, so z.B. durch Unterteilung der Blende - so bei der Blende 4 in Fig. 2 - mit zwei oder mehr Teilsektoren eine quasibinäre Geberausgangsgrösse gewinnen. Durch eine erfindungsgemässe Reihenschaltung von Gebern können auch die Betriebszustände mehrerer Betriebsmittel - getrennt nach Signaltyp, z.B. Druck, Schaltgeräteposition, Oelgehalt - überwacht werden. Dies ist in der Schaltungsanordnung nach Fig. 3 beispielsweise veranschaulicht.

Drei Betriebsmittel, $SF_6$-Leistungsschalter 21, 22, 23, sind an eine gemeinsame Hochspannungssammelschiene 24 angeschlossen. Jeder Leistungsschalter weist in Entsprechung zur Anordnung nach Fig. 1 resp. 2 unter anderem Geber 4, 5, für Gasdruck, Schalterposition und Oelgehalt eines Schalterantriebes auf, die mit den entsprechenden Anlageteilen in Wirkverbindung stehen.

Die Geber 4 der drei Leistungsschalter für den Gasdruck sind ebenso wie die Geber 5 für die Schaltgeräteposition und auch die Geber 6 für den Oelgehalt bezüglich des Lichtleitkabels 2, 2' und 2" in Serie geschaltet. Die Lichtleitkabel führen - getrennt für jeden Signaltyp - zur zentralen Schaltwarte 25, in welcher auch die für jeden Signaltyp getrennt vorhandenen Lichtquellen und Auswerteeinrichtungen 26, 27, 28 untergebracht sind.

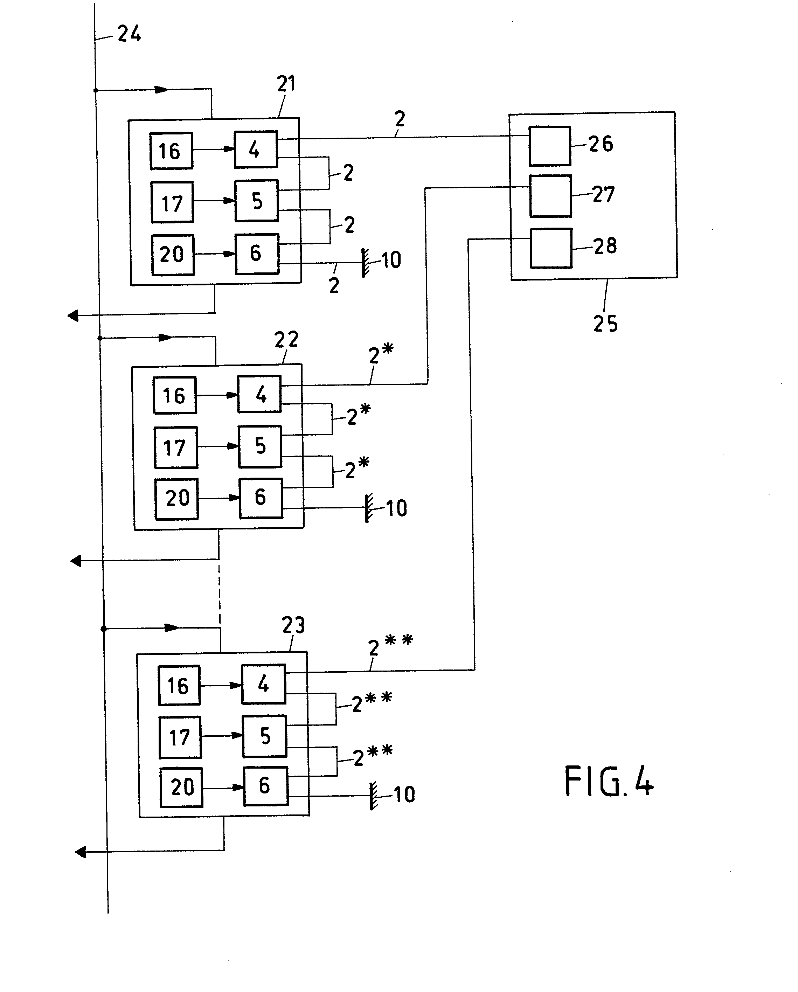

Die Schaltungsanordnung nach Fig. 4 entspricht derjenigen nach Fig. 3 mit dem Unterschied, dass hier die drei Geber 4, 5, 6 jedes Betriebsmittels 21, 22, 23 in Serie geschaltet sind. Die Lichtleitkabel 2, 2*, 2** führen getrennt für jeden Betriebsmittel zur zentralen Schaltwarte 25. Dabei können mehrere Lichtleitkabel zu einem Kabelstrang zusammengefasst sein, von dem aus Lichtleitkabel zu den einzelnen Betriebsmitteln abzweigen.

Die Geber 4, 5, 6 können ferner mit Blenden versehen werden, die als Polarisationsfilter ausgebildet sind. Die Lichtquelle 1 sendet z.B. natürliches Licht aus. Im Strahlengang vor der Auswerteeinrichtung ist ein Analysator vorgesehen. Im Normalzustand gelangt ein bestimmter Anteil des ausgesandten Lichtes in die Auswerteeinrichtung. Bei Aktivierung eines Gebers 4, 5 oder 6, dessen eingeschwenkte Blende als Polarisator wirkt, trifft bei gekreuzten Polarisatoren kein Licht mehr in den Lichtempfänger der Auswerteeinrichtung. Die in Serie geschalteten Geber 4, 5, 6 sind somit im Sinne einer ODER-Verknüpfung geschaltet. Eine UND-Verknüpfung lässt sich in analoger Weise dadurch realisieren, dass die Blende aller Geber im nicht aktivierten Zustand das ausgesandte Licht in einer ersten Richtung polarisieren, während die Geber im aktivierten Zustand das Licht unbeeinflusst durchlassen. Bei entsprechender Stellung des Analysators in der Auswerteeinrichtung 12 trifft erst Licht auf den Lichtempfänger auf, wenn alle Geber angesprochen haben.

Patentansprüche

1. Schaltanlage mit mindestens einer zentralen Schaltwarte und mehreren dezentralen Betriebsmitteln zugeordneten Leiteinrichtungen, wobei die Schaltwarte
   mit den Leiteinrichtungen untereinander durch ein
   Lichtleitkabel verbunden sind, in der zentralen Schaltwarte mindestens eine das Lichtleitkabel speisende
   Lichtquelle und mindestens ein Lichtempfänger vorgesehen sind, in den Leiteinrichtungen Geber vorgesehen
   sind, diese Geber betriebsmittelabhängige Eingangsgrössen in optische Ausgangsgrössen transformieren,
   welche via Lichtleitkabel der zentralen Schaltwarte
   zugeführt werden, und in der zentralen Schaltwarte
   Mittel zur Auswertung des derart modulierten Lichtes
   angeordnet sind, dadurch gekennzeichnet, dass die
   Geber (4, 5, 6) als passive Geber ausgebildet sind,
   deren Gebereingangsgrössen unmittelbar in optische
   Geberausgangsgrössen oder zunächst in mechanische
   Geberausgangsgrössen, welche ihrerseits das den Geber
   verlassende Licht in Abhängigkeit von der Gebereingangsgrösse modulieren, transformiert werden, und
   dass die Geber in bezug auf das Lichtleitkabel (2,
   2', 2", ...) zumindest gruppenweise in Serie geschaltet sind, derart, dass innerhalb einer Gruppe das
   gesamte, den Gebern zugeführte Licht durch diese
   in Abhängigkeit von der jeweiligen Gebereingangsgrösse moduliert wird.

2. Schaltanlage nach Anspruch 1, dadurch gekennzeichnet,
   dass jedem Betriebsmittel der Schaltanlage eine Gruppe
   von passiven Gebern zugeordnet ist, die optisch in
   Serie geschaltet sind.

3. Schaltanlage nach Anspruch 1, dadurch gekennzeichnet,
   dass die passiven Geber eines Signaltyps und unterschiedlicher Betriebsmittel optisch in Serie geschaltet sind.

4. Schaltanlage nach Anspruch 2 oder 3, dadurch gekennzeichnet, dass das Lichtleitkabel (2) mit Licht mit einer definierten Zusammensetzung gespeist wird, dass die Geber (4, 5, 6) abhängig von deren Gebereingangsgrössen aktivierbare Blenden (7, 8, 9) aufweisen.

5. Schaltanlage nach Anspruch 4, dadurch gekennzeichnet, dass die Blenden unterschiedliche Charakteristik hinsichtlich Farbe- und/oder Lichtdurchlässigkeit aufweisen.

6. Schaltanlage nach Anspruch 4, dadurch gekennzeichnet, dass die Blenden als Polarisationsfilter ausgebildet sind.

7. Schaltanlage nach einem der Ansprüche 1 bis 6, dadurch gekennzeichnet, dass die Geber (4, 5, 6) diskret abgestufte Blenden, insbesondere in Abhängigkeit der Gebereingangsgrösse wirkende unterschiedliche Farbblenden, aufweisen.

FIG.1

FIG.2

SF$_6$

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | EP-A-0 033 445 (SIEMENS AG) * Ansprüche 1,2; Abbildung 1; Seite 4, Zeile 25 - Seite 5, Zeile 6 * | 1-3 | G 02 B 6/28 H 04 B 9/00 G 02 B 26/02 |
| | --- | | |
| A | PATENTS ABSTRACTS OF JAPAN, Band 6, Nr. 28, 19. Februar 1982, Seite 160E95; & JP - A - 56 149 840 (MITSUBISHI DENKI K.K.) 19.11.1981 * Insgesamt * | 4-7 | |
| | --- | | |
| A,D | DE-A-3 027 078 (RUHRTAL ELEKTRIZITÄTSGESELLSCHAFT HARTIG GmbH) * Seite 10, Zeile 24 - Seite 11, Zeile 24; Abbildungen * | 1-3 | |
| | ----- | | RECHERCHIERTE SACHGEBIETE (Int. Cl.4) |
| | | | G 02 B H 04 B |

Der vorliegende Recherchenbericht wurde für alle Patentansprüche erstellt.

| Recherchenort DEN HAAG | Abschlußdatum der Recherche 03-07-1985 | Prüfer MORRELL D.M. |
|---|---|---|